Europäisches Patentamt

European Patent Office

Office européen des brevets

(11) Publication number: **0 169 734 B1**

# EUROPEAN PATENT SPECIFICATION

(45) Date of publication of patent specification: **11.10.89**

(21) Application number: **85305246.2**

(22) Date of filing: **23.07.85**

(51) Int. Cl.⁴: **B 60 R 1/04**

(54) **A rear view mirror assembly.**

(30) Priority: **23.07.84 JP 111268/84 u**
**23.07.84 JP 111269/84 u**
**23.07.84 JP 111270/84 u**
**24.08.84 JP 128089/84 u**

(43) Date of publication of application:
**29.01.86 Bulletin 86/05**

(45) Publication of the grant of the patent:
**11.10.89 Bulletin 89/41**

(84) Designated Contracting States:
**DE FR GB**

(56) References cited:
**EP-A-0 085 004**
**AU-B- 54 940**
**CH-A- 373 652**
**DE-B-1 189 398**
**GB-A-2 048 803**

(73) Proprietor: **TOYOTA JIDOSHA KABUSHIKI KAISHA**
**1, Toyota-cho Toyota-shi**
**Aichi-ken 471 (JP)**

(72) Inventor: **Ohyama, Yasuo**
**797 Banchi 1 Kiriyama Shiga-cho**
**Toyota-shi Aichi-ken (JP)**

(74) Representative: **Ben-Nathan, Laurence Albert et al**
**Urquhart-Dykes & Lord 91 Wimpole Street**
**London W1M 8AH (GB)**

Courier Press, Leamington Spa, England.

## Description

The present invention relates to a rear view mirror assembly of a vehicle, and more particularly to a base member for installing the rear view mirror assembly on a windshield of a vehicle as specified in the preamble of Claim 1 and as disclosed for example in EP—A—0 085 004.

An adjustable device disposed between a base member and a support arm of a rear view mirror is disclosed in Japanese Utility Model Laid-open No. Showa 58-24595. In this Japanese Utility Model Laid-open No. Showa 58-24595, the rear view mirror includes a support arm, a spring and a base member. The base member is cemented on an interior of a windshield, and includes a bar and a mounting portion. The spring includes a hooked end and a rear edge, and the hooked end being mounted on the bar of the base member. The rear edge of the spring is disposed on the mounting portion, and the support arm is fixed on the spring by a bolt.

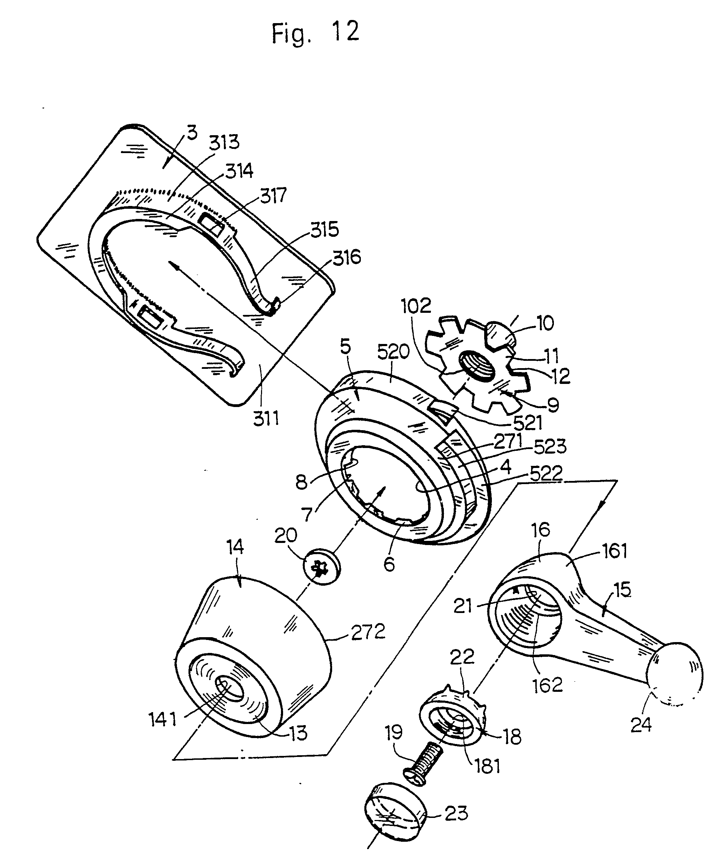

Further, the base member includes a slanted surface on a bottom surface thereof and the support arm includes an incline on an end thereof. As shown in Fig. 12 of Japanese Utility Model Laid-open No. Showa 58-24595, when a force "Pc" is applied to the rear view mirror, the support arm is moved downwardly and breaks away, because the incline of the support arm and the slanted surface of the base member prevent the support arm from resisting the force "Pc".

Furthermore, this reav view mirror assembly includes a spherical ball portion disposed on an opposite end of the support arm, the ball portion being received within a socket portion of the rear view mirror.

Therefore, this rear view mirror can be adjusted to its angle through the spherical ball portion and the socket portion of the rear view mirror. However, the range of the adjustment of this rear view mirror is rather small, because this rear view mirror includes only one adjustment device. In addition, it is not easy for a worker to install the components of the rear view mirror because the worker must install the nut of the spring into the hole of the support arm and then fix the support arm on the spring with a bolt. Such installment procedures are cumbersome and complex.

A suitable material for a base member for mounting a rear view mirror assembly is disclosed in Japanese Utility Model Application Laid-open No. Showa 57-29443. In this publication the suitable material is sintering stainless steel which has a similar coefficient of thermal expansion to a coefficient of thermal expansion of a windshield. That is, the base member which is made of sintering stainless steel expands at a similar rate of expansion as the windshield heated by the sun. In the publication Laid-open No. Showa 57-29443, the coefficient of thermal expansion of the windshield is $9 \times 10^{-9}$ mm/mm/°C, and the coefficient of thermal expansion of the base member which is made of the sintering stainless steel is from $9 \times 10^{-6}$ mm/mm/°C through $12 \times 10^{-6}$ mm/mm/°C.

Generally, sintering stainless steel has many pores therein, and the base member which is made of the sintering stainless steel is cemented to the windshield through an adhesive. Therefore, pores exist between the adhesive and a contact surface of the base member, and air exists in each of the pores. When the sun heats the windshield and the base member, the air expands in the pore and tends to separate the base member from the windshield in spite of the adhesive.

Accordingly, air passages are formed between the adhesive and the contact surface of the base member, and the adhesion of between the windshield and the base member is weakened by the air passages.

The present invention has been developed in view of the foregoing background and to overcome the foregoing drawbacks. It is accordingly an object of this invention to provide a base member of a rear view mirror assembly which is securely cemented to a windshield of a vehicle.

It is another object of the present invention to provide a base member of a rear view mirror assembly which expands at a similar rate of a thermal expansion as the windshield expands with heat of the sun.

In order to accomplish the above-described objects, a rear view mirror assembly according to the present invention includes all features of independent claim 1, namely a first base member and a first unit of the rear view mirror assembly. The first base member is cemented to a windshield of a vehicle through an adhesive, and the first base member is made of rolled stainless steel.

The first base member has a contact surface which is smooth and does not have any pores therein, and the first base member has a similar coefficient of thermal expansion to a coefficient of thermal expansion of the windshield.

Therefore, air does not exist between the adhesive and the contact surface of the first base member. Air passages are not formed between the windshield and the first base member of the rear view mirror assembly, even if the windshield expands with the heat of sun, because the contact surface of the first base member does not have any pores therein.

Further, the first base member of the rear view mirror assembly can expand at a similar rate of expansion as the windshield, when the sun heats the windshield and the first base member, because the first base member has almost the same coefficient of thermal expansion as the coefficient of thermal expansion of the windshield.

Accordingly, the first base member can be securely cemented to the windshield through the adhesive.

The above objects, features and advantages of the present invention will become more apparent from the description of the invention which follows, taken in conjunction with the accompanying drawings, wherein like reference numerals denote like elements, and wherein:

Fig. 1 is a perspective view showing a rear view mirror assembly according to the present invention;

Fig. 2 is an enlarged cross-sectional view of the rear view mirror assembly of a first embodiment, taken along the line II—II in Fig. 1;

Fig. 3 is an enlarged perspective view showing components of the rear view mirror assembly shown in Fig. 1 in a disassembled condition;

Fig. 4 is a cross-sectional view of the second base member of the rear view mirror assembly of Fig. 3 taken along the line IV—IV of the Fig. 3;

Fig. 5 is a cross-sectional view of the first base member of the rear view mirror assembly of Fig. 3, taken along the line V—V of Fig. 3;

Fig. 6 is a cross-sectional view of the second base member mounted to the first base member of the rear view mirror assembly, taken along the line V—V of Fig. 3;

Fig. 7 is a cross-sectional view of the rear view mirror assembly of Fig. 2, which shows the support arm rotated about a central rotational point 17 of the support arm in the clockwise direction of Fig. 2 when a force "$F_1$", is applied to the support arm in the horizontal direction of Fig. 2;

Fig. 8 is a cross-sectional view of the rear view mirror assembly of Fig. 2 which shows the support arm rotated about the central point 17 in the clockwise direction in an amount greater than the condition illustrated in Fig. 7;

Fig. 9 is a cross-sectional view of the rear view mirror assembly of Fig. 2, which shows the force "$F_1$" applied to the support arm along the line connecting the central point 17 of the support arm to a central point for the rotation of the rear view mirror;

Fig. 10 is a cross-sectional view of the rear view mirror assembly of Fig. 2, which shows the support arm rotated about a contact point 27 between a mounting member and a base member in the clockwise direction;

Fig. 11 is an enlarged perspective view of the rear view mirror assembly of a second embodiment, illustrating the components in a disassembled condition;

Fig. 12 is an enlarged perspective view of the rear view mirror assembly of a third embodiment, illustrating the components in a disassebmbled condition; and

Fig. 13 is an enlarged cross-sectional view of the rear view mirror assembly of a fourth embodiment, taken along the line II—II in Fig. 1.

The present invention will be described in detail with reference to the accompanying drawings which illustrate different embodiments according to the present invention.

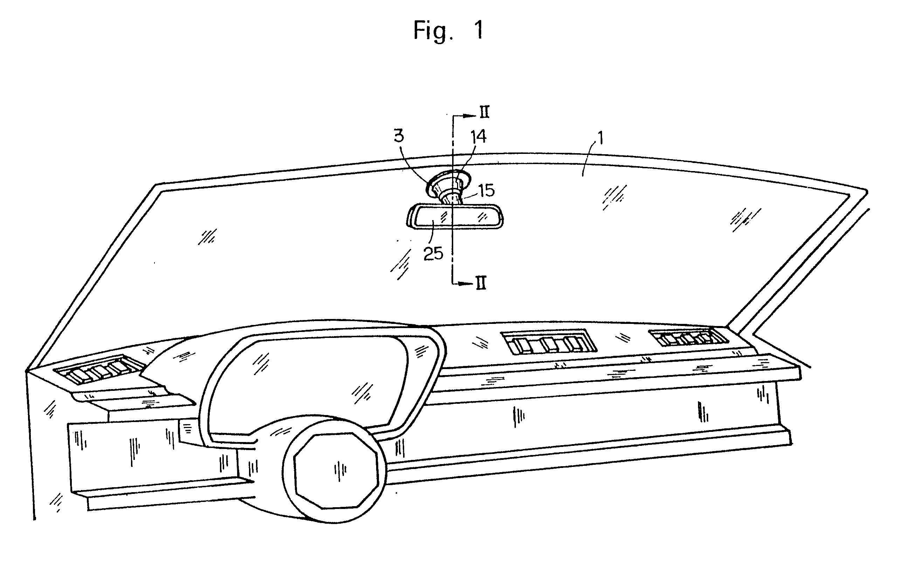

Referring to Figure 1, a rear view mirror assembly is disposed at an upper central portion of a windshield 1 of a vehicle. A rear view mirror 25 is rotatably mounted on an inner surface of the windshield 1 through a support arm 15, a mounting member 14 and a first base member 3.

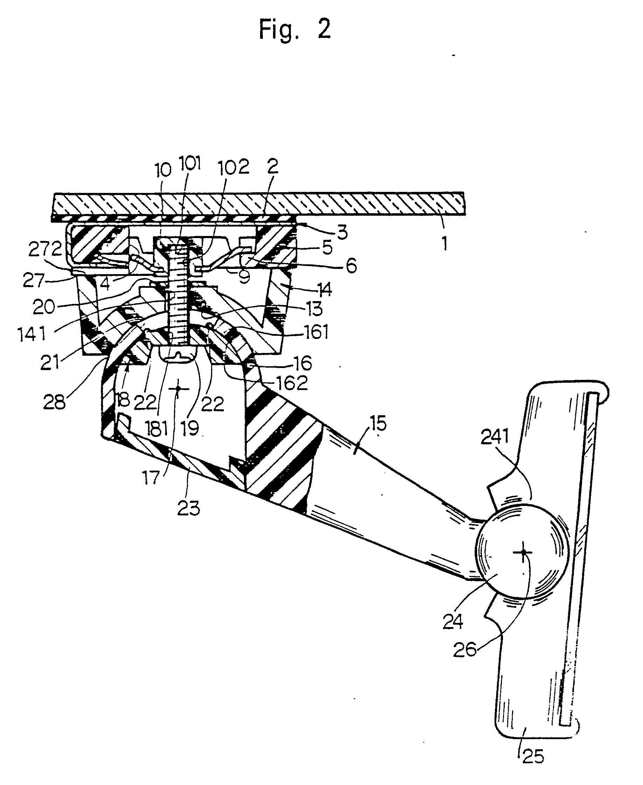

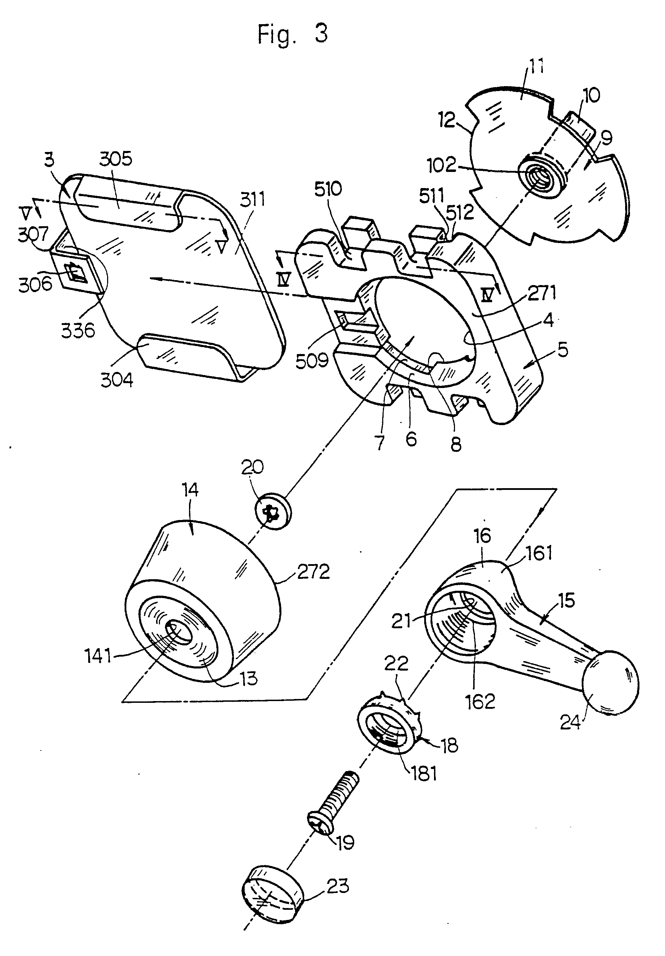

As shown in Figure 2 and Figure 3, the first base member 3 is cemented by an adhesive 2 to the windshield 1. The first base member 3 is made of rolled stainless steel. The first base member 3 has a smooth contact surface which does not have any pores therein, and a similar coefficient of thermal expansion as a coefficient of thermal expansion for the windshield 1.

Therefore, air does not exist between the adhesive 2 and the contact surface of the first base member 2. Air passages are not formed between the windshield 1 and the first base member 3 of the rear view mirror assembly, even if the sun heats the windshield 1 and the first base member 3, because the contact surface of the first base member 3 does not have any pores therein. Further, when sunshine heats the windshield 1 and the first base member 3, the first base member 3 of the rear view mirror assembly expands at a similar rate of expansion as the windshield 1, because the first base member 3 has almost the same coefficient of thermal expansion as a coefficient of thermal expansion of the windshield 1.

The first base member 3 includes a plurality of first flanges 304, 305 and a second flange 307. Each of the plurality of first flanges 304, 305 is disposed on a side portion of the first base member 3.

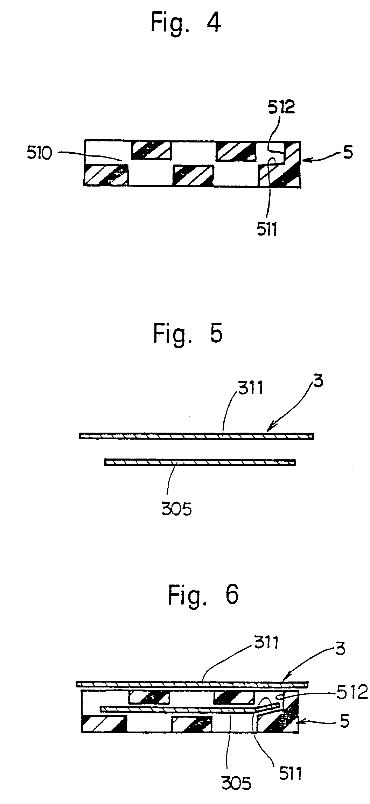

As shown in Figure 5, the first flange 305 has a plate which extends horizontally, and parallels a main plate 311 of the first base member 3. As shown in Figure 3, the first flange 305 extends downwardly from the side portion of the main plate 311 of the first base member 3, and is bent toward an inside of the first base member 3.

The second flange 307 is disposed on a front portion of the first base member 3, and includes a second stopper 336 and a pawl 306. The second stopper 336 is on a vertical portion of the second flange 307 which extends downwardly from the main plate 311 of the first base member 3. The pawl 306 is disposed on a horizontal portion of the second flange 307 which extends from a lower part of the vertical portion of the second flange 307. The pawl 306 is biased upwardly toward the main plate 311.

A first unit for installing the rear view mirror assembly on the windshield 1 includes a second base member 5, a spring 9, the mounting member 14, the support arm 15, a second ball member 18 and a bolt 19.

The second base member 5 is mounted on the plurality of first flanges 304, 305 and the second flange 307 of the first base member 3. The second base member 5 includes a plurality of upper projections and a plurality of lower projections which are disposed on both sides of the second base member 5. Each projection of the lower projections and the upper projections has an inner surface. As shown in Figure 4 and Figure 6, a gash 510 is defined between the inner surfaces of the lower projections and the inner surfaces of the upper projections on each side of the second base member 5. The plates of the first flanges 304, 305 of the first base member 3 are inserted into the gash 510 on each side of the second base member 5. A rearmost projection (i.e., furthest from the pawl 306) on each side of the second base member 5 includes a third stopper 512 and an inclined inner surface 511, so that a rear portion of the plate of the first flange 305 of the first base member 3 is bent along the inclined inner surface 511 of the rearmost projections of the second base member 5. Accordingly, the plates of the first flanges 304, 305 of the first base member 3 securely engage with the inner surfaces of the projections of the second base member 5.

The second stopper 336 of the second flange 307 of the first base member 3 and the third stopper 512 of the rearmost projection of the second base member 5 prevent the second base member from being inserted more than a predetermined distance on a plurality of the first flanges 304, 305 and the second flange 307 of the first base member 3.

The second base member 5 includes an engagement recess 509 which is defined on a bottom surface thereof, and the pawl 306 of the second flange 307 of the first base member 3 engages with the engagement recess 509 of the second base member 5. Therefore, the pawl 306 of the first base member 3 prevents the second base member 5 from moving between the plurality of the first flanges 304, 305 and the second flange 307 of the first base member 3.

The second base member 5 includes a mounting portion 271 which is disposed in the vicinity of an outer peripheral edge thereof, and is on a substantially flat horizontal surface. A hook 6 extends from an inner portion of the mounting portion 271. The hook 6 has an inner peripheral edge and an upper surface, the inner peripheral edge defining an opening 4 within the second base member 5. The upper surface of the hook 6 has a plurality of second projections 8 and a plurality of second recesses 7 thereon.

A spring 9 is disposed within the opening 4 of the second base member 5. The spring 9 includes a cap 10, a plurality of first projections 11 and a plurality of first recesses 12. The cap 10 is fixed at a central portion of the spring 9, and includes a cavity 102 with an inner end 101 therein. The cavity 102 of the cap 10 includes a screw hole therein.

The plurality of first projections 11 of the spring 9 extend outwardly in its radial direction, and engage with the plurality of second recesses 7 of the second base member 5. Therefore, the spring 9 engages securely with the second base member 5, so that the spring 9 cannot rotate in the opening 4 of the second base member 5. Further, the spring 9 can support a predetermined amount of a downward vertical force so that the spring 9 can break away from the hook 6, when more than the predetermined amount of the downward vertical force is applied to the spring 9.

The mounting member 14 is disposed on the mounting portion 271 of the second base member 5. The mounting member 14 includes an upper peripheral edge 272 and a first socket portion 13.

The upper peripheral edge 272 is in contact with the mounting portion 271 of the second base member 5, and the first socket portion 13 of the mounting member 14 is formed in a lower surface of the mounting member 14. The first socket portion 13 is formed in a semi-spherical concave shape, and has a first aperture 141 at the central portion of the mounting member 14.

The support arm 15 is pivotally mounted on the first socket portion 13 of the mounting member 14. The support arm 15 has an opposite end 24. The end 16 of the support arm 15 includes an outer surface and an inner surface. The outer surface of the support arm 15 has a first ball portion 161 thereon formed in a semi-spherical convex shape. The first ball portion 161 is mounted on the first socket portion 13 of the mounting member 14. The inner surface of the support arm 15 includes a second socket portion 162 which is formed in a semi-spherical concave shape. The inner surface of the support arm 15 defines a recess within the end 16 of the support arm 15, and a second aperture 21 is opened between the second socket portion 162 of the inner surface of the support arm 15 and the first ball portion 161 on the outer surface of the support arm 15. The second aperture 21 has an inner peripheral edge. A diameter of the second aperture 21 is greater than the diameter of the first aperture 141 of the mounting member 4.

A curved or second ball member 18 having an upper semi-spherical convex surface is slidably mounted on the second socket portion 162 of the supporting arm 15. The second ball member 18 has a third aperture 181 and a plurality of protrusion 22 on its convex surface. Preferably, at least three protrusions 22 are disposed on the upper semi-spherical convex surface. The protrusions 22 are normally located within the inner peripheral edge of the second aperture 21.

A bolt 19 is provided for securing the various components together. The bolt 19 includes a head portion on an end thereof adjacent the second ball member 18. The opposite end of the bolt 19 is inserted into the cavity 102 in the cap 10 of the spring 9. An intermediate shank portion of the bolt 19 extends through the third aperture 181 of the second ball member 18, the second aperture 21 of the support arm 15, and the first aperture 141 of the mounting member 14. A diameter of the second aperture 21 is greater than the diameter of the first aperture 141 and the third aperture 181, so that the support arm 15 is supported for universal movement. That is, the support member 15 can rotate about the vertical axis of the bolt 19 (Fig. 2), the protrusions 22 rotating within the second aperture 21. The support member 15 can also rotate about a central point 17 (Fig. 2) of the support arm 15 to an extent defined by the inner peripheral edge of the second aperture 21. Rotation about the central point 17 requires the inner surface of the support arm 15 to ride over the protrusions 22.

It should be apparent to one skilled in the art that the bolt 19 may be a screw or a rod.

The opposite end of the bolt 19 is prevented from being inserted into the cavity 102 of the cap 10 more than predetermined length by the inner end 101 of the cap 10, so that a bolt length defined between the cap 10 and the head portion of the bolt 19 is constant. The bolt length between the cap 10 and the head portion of the bolt 19 is greater than a sum of the thicknesses of the mounting member 14 around the first aperture 141, the supporting arm 15 around the second aperture 21, and the second ball member 18 around the third aperture 181. Therefore, the support arm 15 can move along the longitudinal axis of the bolt 19, as well as rotating about a central portion 17 of the support arm 15.

It will be apparent to one skilled in the art that the bolt 19 may be integral with the second ball member 18.

The recess of the support arm 15 opens downward in a lower portion of the support arm 15, and a cover 23 is disposed within the recess. Therefore, the cover 23 covers the recess and improves the aesthetic appearance of the rear view mirror assembly.

The opposite end of the support arm 15 includes a ball portion 24, and the ball portion 24 formed in a spherical ball shape. The ball portion 24 is rotatably received in a spherical socket portion 241 which is defined within the rear view mirror 25.

When the bolt 19 engages the spring 9, a second unit of the rear view mirror assembly is formed and includes the bolt 19, the spring 9, the mounting member 14, the support arm 15 and the second ball member 18. When the second unit is attached to the second base member 5 by engaging the spring 9 on the hook 6, a first unit of the rear view mirror assembly is formed. The first unit can be attached to the first base member 3 as described above. When more than the predetermined amount of the downward vertical force is applied to the spring 9, the second unit of the rear view mirror assembly can break away from the second base member 5.

A washer 20 is disposed between the cap 10 and the mounting member 14. Preferably, the washer 20 is made of synthetic resin. The washer 20 includes a hole therein which is slightly smaller than a diameter of the bolt 19. Therefore, the washer 20 prevents the bolt 19 from moving easily in the hole of the washer 20, once the bolt 19 is inserted into the hole of the washer 20. Further, the washer 20 and the bolt 19 can unite the mounting member 14, the support arm 15 and the second ball member 18, such that these components cannot change their relative position during assembly of the rear view mirror. During assembly, these components (i.e., mounting member 14, support artm 15 and second ball member 18, all of which are united by the bolt 19 and the washer 20) are attached to the spring 9 by threading the bolt 19 into the cop 10 to form the second unit. The assembly of the second unit with the second base member 5 forms the first unit.

As shown in Figure 2, the plurality of protrusions 22 of the second ball member 18 are normally disposed in the second aperture 21 of the support arm 15, so that the plurality of protrusions 22 normally prevent the rotation of the support arm 15 about the central point 17. Therefore, it is convenient for a worker assemble the components into the second unit and to install the second unit of the rear view mirror assembly on the second base member 5, because these components cannot change their positions due to the interlocked relation between the protrusions 22 and the second aperture 21 of the support arm 15. That is, the insertion of the protrusion 22 within the second aperture 21 temporarily maintains the components in position during assembly. As noted above, once assembled, the inner surface of the support arm 15 can ride over the protrusions 22 to permit rotation about the central point 17.

The second unit is attached to the second base member 5 to form the first unit. The first unit is easily installed on a vehicle by sliding the second base member 5 between the flanges 304, 305 of the first base member 3. The second base member 5 is locked in the correct position on the first base member 3 by the second and third stoppers 336, 512, as well as engagement of the pawl 306 in the recess 509.

Consequently, assembly and installation of the rear view mirror in accordance with the present invention are simplified. Assembly and installation are thus less cumbersome and time consuming than known rear view mirror assemblies.

Description will be hereunder given of operation of the above-described embodiment.

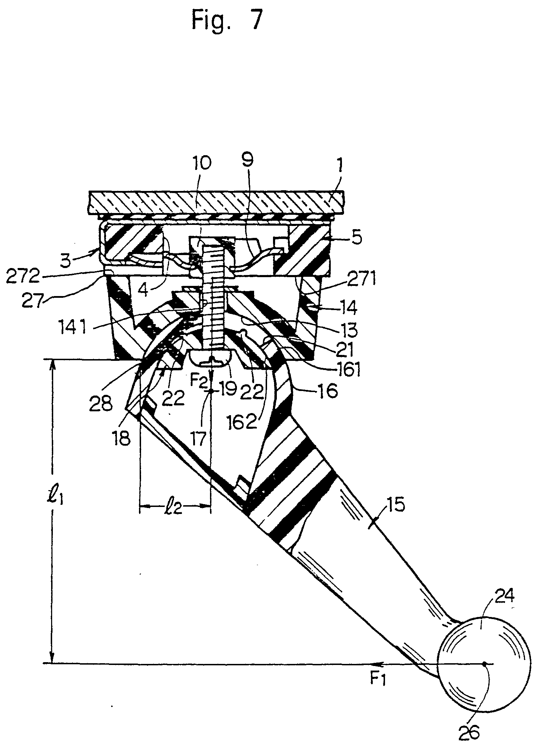

As shown in Figure 7, the inner surface of the support arm 15 can ridyson the protrusion 22 of the second ball member 18, when a force "$F_1$" is applied to a central point 26 of the ball end 24 of the support arm 15. As a result of the force "$F_1$", the support arm 15 rotates about a central point 17 of the support arm 15. The intermediate shank portion of the bolt 19 limits the movement of the support arm 15 to rotate within a space defined by the second aperture 21. That is, the inner peripheral edge of the second aperture 21 contacts the intermediate shank portion of the bolt 19 and thus limits the rotation of the support arm 15 about the central point 17.

When the force "$F_1$" is continuously applied to the support arm 15 in the horizontal direction in Fig. 7, a first moment $M_1$ in the clockwise direction about a point 28 is calculated by a first formula (1) as follows:

$$M_1 = l_1 \cdot F_1 \qquad (1)$$

In this first formula (1), $l_1$ is a vertical length between the point 28 and the central point 26 of the ball end 24 for the rear view mirror 25. The point 28 is defined between the first ball portion 161 of the support arm 15 and an edge of the first socket portion 13 of the mounting member 14.

A second moment "$M_2$" in the clockwise direction about point 28 in Fig. 7 is calculated by the second formula (2) as follows:

$$M_2 = l_2 \cdot F_2 \qquad (2)$$

In the second formula (2), $l_2$ is the horizontal length between point 28 and the bolt 19, and "$F_2$" is a downward vertical force on the bolt 19. The resiliency of the spring 9 resists the force "$F_2$".

For equilibrium, $M_1$ must equal $M_2$. Therefore, the downward vertical force "$F_2$" along the bolt 19, which is applied to the spring 9, is calculated by a third formula (3) as follows:

$$F_2 = (l_1/l_2) \cdot F_1 \qquad (3)$$

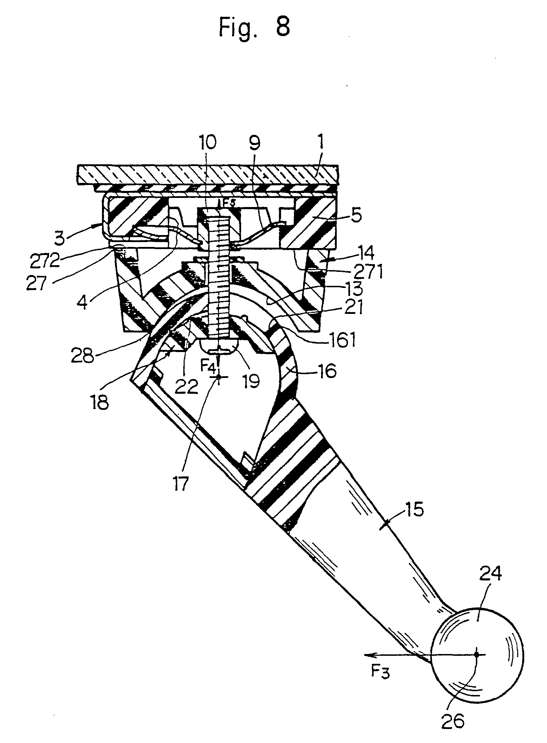

In Figure 8, a force "$F_3$" is applied to the central point 26 and a downward vertical force "$F_4$" is applied to the spring 9. If the force "$F_3$" is larger than the force "$F_1$", and a force "$F_4$" is not larger than the predetermined downward vertical force, the support arm 15 is further rotated about the point 28. The first ball portion 161 of the support arm 15 separates partially from the first socket portion 13 of the mounting member 14, and the support arm 15 is supported by the spring 9. In this condition, the force "$F_4$" is balanced with a bias force "$F_5$" of the spring 9 so that the moments generated about the point 28 are equal. The force "$F_4$" is calculated by a fourth formula (4) as follows:

$$F_4 = (l_1/l_2) \cdot F_3 \qquad (4)$$

Next, if the force "$F_3$" becomes larger, and the force "$F_4$" becomes larger than the predetermined amount of the downward vertical force, the spring 9 can break away from the hook 6 of the second base member 5. Concurrently the first unit of the rear view mirror assembly can break away when the spring 9 separates from the hook 6.

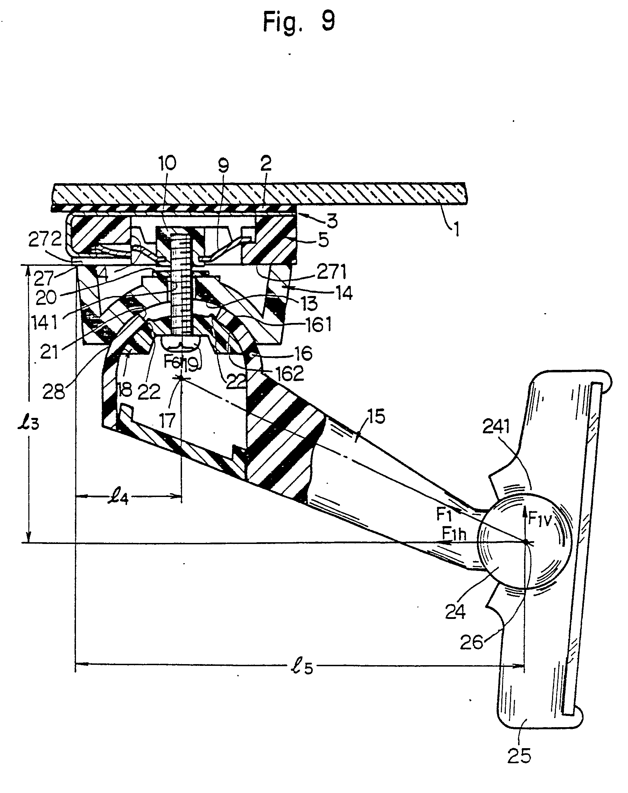

As shown in Figure 9, when the force "$F_1$" is applied to the support arm 15 along the line which connects the central point 26 to the central point 17 of the support arm 15, the support arm 15 cannot be rotated about the central point 17.

However, the vertical and horizontal components $F_{1v}$, $F_{1h}$ of the force $F_1$ cause a third moment $M_3$ in the clockwise direction about a point 27, the point 27 being defined between the mounting portion 271 of the second base member 5 and the upper edge 272 of the mounting member 14. The third moment $M_3$ in the clockwise direction about the point 27 is calculated by a fifth formula (5) as follows:

$$M_3 = l_3 \cdot F_{1h} - l_5 \cdot F_{1v} \qquad (5)$$

In this fifth formula (5), $l_3$ is a vertical length between the point 27 and the central point 26 of the rotation of the rear view mirror 25, and $l_5$ is a horizontal length between the point 27 and the point 26.

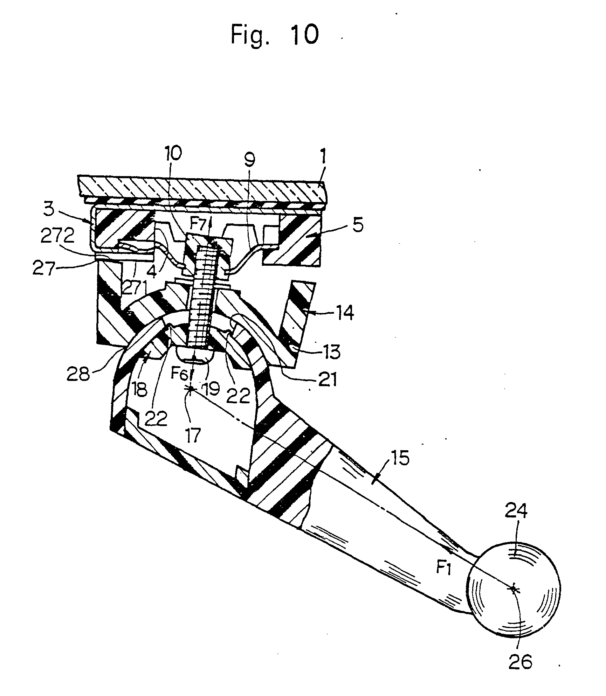

Therefore, as shown in Figure 10, the support arm 15 and the mounting member 14 can be rotated about the point 27, so that the upper edge 272 of the mounting member 14 separates partially from the mounting portion 271 of the second base member 5. In this case, both of the support arm 15 and the mounting member 14 are supported by the spring 9. In Figure 10, a downward vertical force "$F_6$" along the bolt 19 generates a fourth moment $M_4$ in the clockwise direction about the point 27. The fourth moment $M_4$ is calculated by the following sixth formula (6):

$$M_4 = F_6 \cdot l_4 \qquad (6)$$

In this sixth formula (6), $l_4$ is a horizontal length between the point 27 and the bolt 19.

If $M_3$ equals $M_4$, then the force $F_6$ along the bolt 19 is balanced with a bias force "$F_7$" of the spring 9 and calculated by a seventh formula (7) as follows:

$$F_6 = (l_3 \cdot F_{1h} - l_5 \cdot F_{1v})/l_4 = F_7 \qquad (7)$$

Next, if the force "$F_1$" increases and the force "$F_6$" becomes larger than the predetermined amount of the downward vertical force, the spring 9 can break away from the hook 6 of the second bar member 5. Therefore, the first unit of the rear view mirror assembly can break away.

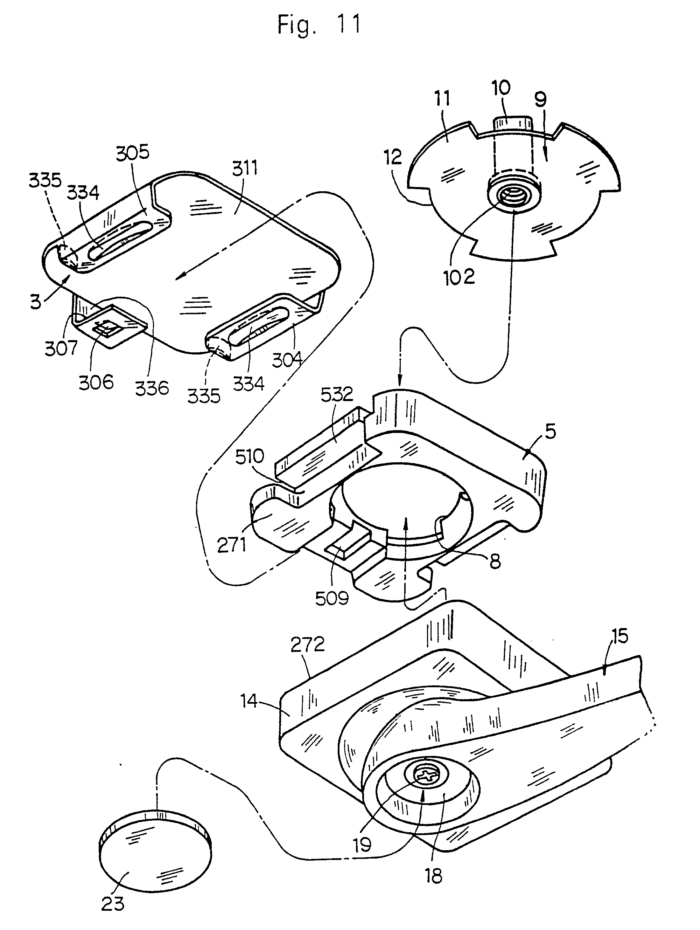

A second embodiment of a rear view mirror assembly is shown in Figure 11. The second embodiment is similar to the first embodiment disclosed in Figure 2. However, the second embodiment has several differences disclosed hereunder.

The first base member 3 is cemented to a windshield 1 by an adhesive 2. The first base member 3 is made of a rolled stainless steel so that a contact surface of the first base member 3 has a smooth surface without pores and a similar coefficient of thermal expansion as the coefficient of thermal expansion for the windshield 1. Thus, air does not exist between the contact surface and the windshield 1 so that air passages are not formed. Further, the first base member 3 and the windshield 1 will expand at the same approximate rate when heated by the sun.

The first base member 3 has a pair of first flanges 304, 305, each having a plate. Each plate of the first base member 3 has a protrusion 334 which projects upwardly toward the main plate 311. In addition, the protrusion 334 of the first base member 3 is biased upwardly. Once assembled, the protrusion 334 of the first base member 3 is in contact with an inner surface 532 of an upper projection of a second base member 5, so that the protusion 334 of the first base member 3 biases the second base member 5 on a main plate 311 of the first base member 3.

Each of the pair of the first flanges 304, 305 includes a first stopper 335 which is disposed on a front end of each of a pair of the first flanges 304, 305 adjacent the second flange 307. The first stopper 335 of each of the first flanges 304, 305 is a spring, which prevents the second base member 5 from being inserted more than a predetermined distance on the first flanges 304, 305 and the second flange 307 of the first base member 3.

The protrusion 334 and the first stopper 335 of the first flange 305 of the first member 3 prevent the second base member 5 from vibrating in a space which is defined between the plates of the first flanges 304, 305 and the main plate 311 of the first base member 3 in the vertical and longitudinal directions of the vehicle. Like the first embodiment, the second embodiment facilitates installation of the rear view mirror assembly.

A third embodiment of rear view mirror assembly is shown in Figure 12. The third embodiment is similar to the first embodiment disclosed in Figure 3. However, the third embodiment has several differences disclosed hereunder.

The first base member 3 is cemented to a windshield 1 by an adhesive 2. The first base member 3 is made of rolled stainless steel so that a contact surface of the first base member 3 does not have any pores thereon. In addition, the first base member 3 has a similar coefficient of thermal expansion as the coefficient of thermal expansion for the windshield 1. Thus, air does not exist between the contact surface and the windshield 1 so that air passages are not formed. Further, the first base member 3 and the windshield 1 will expand at the same approximate rate when heated by the sun.

The first base member 3 includes a wall 313, a first flange 314, a pair of holes 317 and a pair of clamping tabs 315. The wall 313 extends downwardly from a main plate 311 of the first base member 3 and is formed in a letter 'U' shape. The first flange 314 of the first base member 3 extends horizontally from a lower edge of the wall 313, and parallels the main plate 311 of the first base member 3. Each of a pair of holes 317 of the first base member 3 is opened in each of side portion of the wall 313, and each of the clamping tabs 315 extends horizontally from each of a pair of rear ends of the wall 313. The clamping tab 315 of the first base member 3 are spring biased toward an inside of the first base member 3. A space is defined between the main plate 311 and an upper edge of the clamping tab 315, and a rear end of the clamping tab 315 is bent back outwardly.

A second base member 5 includes an outer peripheral wall 520, a pair of pawls 521, and a step thereon. A front portion of the outer peripheral wall 520 of the second base member 5 is in contact with the wall 313 of the first base member 3, and a mounting portion 271 of the second base member 5 is mountd on the first flange 314 of the first base member 3. Each of the pair of pawls 521 of the second base member 5 engages with each of the pair of holes 317 of the first base member 3. The step of the second base member 5 is defined within a rear portion of the second base member 5, and the step of the second base member 5 includes a first horizontal plate 522 and a vertical surface 523. The first horizontal plate 522 of the second base member 5 is inserted into the space defined between the main plate 311 and the clamping tabs 315, and the vertical surface 523 of the second base member 5 is in contact with the clamping tabs 315 of the first base members 3. The third embodiment also facilitates installation of the rear view mirror assembly.

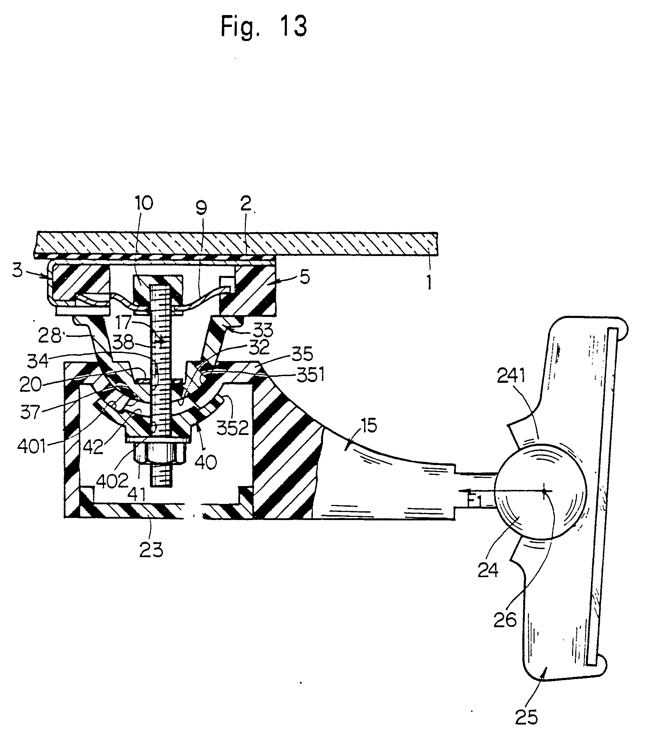

A fourth embodiment of a rear view mirror assembly is shown in Figure 13. The fourth embodiment is similar to the first embodiment disclosed in Figure 2. However, the fourth embodiment has several differences disclosed hereunder.

The first base member 3 is cemented to a windshield 1 by an adhesive 2. The first base member 3 is made of rolled stainless steel so that a contact surface of the first base member 3 does not have any pores thereon. In addition, the first base member 3 has a similar coefficient of thermal expansion as the coefficient of thermal expansion for the windshield 1. Thus, air does not exist between the contact surface and the windshield 1 so that air passages are not formed. Further, the first base member 3 and the windshield 1 will expand at the same approximate rate when heated by the sun.

A bolt 38 engages with a cap 10 and extends downwardly from the spring 9. A mounting member 33 includes a third ball portion 32 at a lower surface thereof, and a fourth aperture 34 therein. The fourth aperture 34 is opened in the third ball portion 32, and the bolt 38 is inserted into the fourth aperture 34. A diameter of the fourth aperture 34 is slightly longer than a diameter of the bolt 38. The third ball portion 32 of the mounting member 33 is formed in a semi-spherical convex shape.

A support arm 15 includes an end 35 and an opposite end. The end 35 of the support arm 15 includes an outer surface and an inner surface thereof. A third socket portion 351 is formed on the outer surface of the support arm 15, and the third socket portion 351 is slidably mounted on the third ball portion 32 of the mounting member 33. The third socket portion 351 of the support arm 15 is formed in a semi-spherical socket concave shape, and a fifth aperture 37 is opened in the third socket portion 351 of the support arm 15. A diameter of the fifth aperture 37 of the support arm 15 is longer than the diameter of the fourth aperture 34 of the mounting member 33, and the bolt 38 is inserted into the fifth aperture 37 of the support arm 15. A fourth ball portion 352 is formed on the inner surface of the support arm 15, and the fourth ball portion 352 of the support arm 15 is formed in a semi-spherical convex shape. The fifth aperture 37 is opened in the fourth ball portion 352 of the support arm 15.

A fourth socket member 40 is mounted on the fourth ball portion 352 of the support arm 15, and the fourth socket member 40 includes an upper semi-spherical concave surface 401 and an inner peripheral edge thereof. The inner peripheral edge defines a sixth aperture 402 which is opened in the upper semi-spherical concave surface 401 thereof. A diameter of the sixth aperture 402 of the fourth socket member 40 is slightly longer than the diameter of the bolt 38, and the bolt 38 is inserted into the sixth aperture 402 of the fourth socket member 40.

The fourth socket member 40 includes a second protrusion 42 on the upper semi-spherical concave surface 401 thereof, and the second protrusion 42 is disposed around the sixth aperture 402 of the fourth socket member 40. The second protrusion 42 is formed in a trapezoid shape. The second protrusion 42 of the fourth socket member 40 is normally disposed into the fifth aperture 37 of the support arm 15, and the second protrusion 42 includes an inclined side and a semi-spherical concave surface thereof. An outer peripheral edge of the second protrusion 42 is rounded off. The inclined side of the second protrusion 42 is in contact with the inner peripheral edge of the support arm 15.

Therefore, the second protrusion 42 of the fourth socket member 40 temporarily prevents the support arm 15 from rotating about a central point 17 of the support arm 15. However, the fourth ball portion 352 of the support arm 15 can rise on the second protrusion 42 of the fourth socket member 40 by way of the inclined side and the round outer peripheral edge of the second protrusion 42, when a force "$F_1$" is applied on the support arm 15. A nut 41 is disposed under the fourth socket member 40 and the nut 41 engages with the bolt 38. Therefore, the nut 41 can support the fourth socket member 40, the support arm 15 and the mounting member 33 on the hook 6 of the second base member 5 through the bolt 38 and the spring 9.

A first unit of the rear view mirror assembly of the fourth embodiment includes the second base member 5, the spring 9, the fourth socket member 40, the support arm 15, the mounting member 33 and the bolt 38. The first unit of the fourth embodiment united by the bolt 38, so that it is easy for a worker to install the first unit of the fourth embodiment on the first base member 9. Accordingly it is not necessary for a worker to install components of the rear view mirror assembly on the windshield 1 piece by piece.

As described herein, the present invention overcomes the shortcomings of the known art by providing a first unit of the rear view mirror assembly enables a worker to install easily components of the rear view mirror assembly on a windshield or body member of a vehicle.

## Claims

1. A rear view mirror assembly of a vehicle comprising a first base member (3) having a metallic contact surface secured to a windshield (1) of a vehicle by an adhesive means (2) for fixing the first base member (3) on the windshield (1), and a unit of a rear view assembly mounted on the first base member (3), characterized in that the first base member is made of rolled stainless steel and the contact surface of the first base member (3) has a smooth surface lacking pores therein thereby preventing air from existing between the adhesive means (2) and the contact surface of the first base member (3).

2. A rear view mirror assembly as claimed in claim 1, characterized in that the first base member (3) has a similar coefficient of thermal expansion as the coefficient of thermal expansion for the windshield (1).

3. A rear view mirror assembly as claimed in claim 1, characterized in that the first base member (3) is secured to the windshield (1) and has a side portion with a first flange (305) and a front portion with a second flange (307), and the unit of the rear view mirror assembly comprises, a second base member (5) mounted on the first and second flanges (305, 307) of the first base member (3), the second base member (5) having a hook (6) and a mounting portion (271) thereon, a spring member (9) mounted on the hook (6) of the second base member (5) and having an engagement means (10) thereon, the spring member (9) supporting a predetermined amount of a force on the hook (6) of the second base member (5), a mounting member (14) having a first surface (272) disposed on the mounting portion (271) of the second base member (5), the mounting member (14) having a first aperture (141) and a first socket portion (13) disposed around the first aperture (141) on a second opposite surface of the mounting member (14), a support arm (15) having a first end (16) with an outer surface (161), an inner surface and an inner peripheral edge, and a second opposite end (24) on which a rear view mirror (25) is adapted to be rotatably mounted, the outer surface (161) of the support arm (15) mounted slidably on the first socket portion (13) of the mounting member (14), the inner surface of the support arm (15) having a second socket portion (162), the inner peripheral edge defining a second aperture (21) extending from the second socket portion (162) of the inner surface to the outer surface (161) of the support arm (15), a diameter of the second aperture (21) of the support arm (15) being greater than a diameter of the first aperture (141) of the mounting member (14), a second ball member (18) mounted slidably on the second socket portion (162) of the inner surface of the support arm (15), and an engagement member (19) inserted into the second aperture (21) of the support arm (15) and the first aperture (141) of the mounting member (14), the engagement member (19) having one end engaging with the engagement device (10) of the spring member (9), and an opposite end (24) of the engagement member (19) connected to the second ball member (18), the engagement member (19) supporting the second ball member (18), the support arm (15) and the mounting member (14) on the second base member (5) through the spring member (9), the unit of the rear view mirror assembly being united by the engagement member (19), and installed on the first base member (3).

4. A rear view mirror assembly as claimed in claim 1, characterized in that the first base member (3) has a wall (313), a first flange (314) and clamping tabs (315), the wall (313) of the first base member (3) extending from a main plate (311) of the first base member (3), the first flange (314) of the first base member (3) extending inwardly from a lower edge of the wall (313) of the first base member (3), the clamping tabs (315) extending in a rearward direction of the vehicle from both ends of the wall (313) of the first base member (3), and the unit of the rear view mirror assembly comprises a second base member (5) having a mount portion (271), a first plate (522) and a hook (6) thereon, a front part of the mount portion (271) of the second base member (5) being mounted on the first flange (314) of the first base member (3), the first plate (522) being mounted on the clamping tabs (315) of the first base member (3), a spring member (9) mounted on the hook (6) of the second base member (5), the spring member (9) having a cap (10) and supporting a predetermined amount of a force on the hook (6) of the second base member (5), a mounting member (14) disposed on an inner part of the mounting portion (271) of the second base member (5), the mounting member (14) having a first aperture (141) and a first socket portion (13), the first aperture (141) opened in the first socket portion (13) and disposed on a surface of the mounting member (14), a support arm (15) having a first end (16) with a first ball portion (161), an inner peripheral edge and a second socket portion (162), and a second opposite end (24) on which a rear view mirror is adapted to be rotatably supported, the first ball portion (161) of the support arm (15) disposed on an outer surface of the first end (16) of the support arm (15), the first ball portion (161) mounted slidably on the first socket portion (13) of the mounting member (14), the second socket portion (162) disposed on an inner surface of the first end (16) of the support arm (15), the inner peripheral edge defining a second aperture (21) within the first end (16) of the support arm (15), the second aperture (21) extending through the second socket portion (162) of the support arm (15) and the first ball portion (161) of the support arm (15), a diameter of the second aperture (21) being greater than a diameter of the first aperture (141) of the mounting member (14), a second ball member (18) mounted slidably on the second socket portion (162) of the support arm (15), the second ball member (18) having a third aperture (181) thereon, and an engagement member (19) inserted into the third aperture (181) of the second ball member (18), the second aperture (21) of the support arm (15) and the first aperture (141) of the mounting member (14), one end of the engagement member (19) engaging with the cap (10) of the spring member (9), an opposite end (24) of the engagement member (19) having a head portion which supports the second ball member (18), the support arm (15) and the mounting member (14) on the second base member (5) through the spring member (9), the unit of the rear view mirror assembly being united by the engagement member (19), and the unit of the rear view mirror assembly being installed on the first base member (3).

5. A rear view mirror assembly as claimed in claim 4, characterized in that the first base member (3) has a coefficient of thermal expansion similar that of the windshield (1).

6. A rear view mirror assembly as claimed in claim 1, characterized in that the first base member (3) has a side portion with a first flange (305) and a front portion with a second flange (307), and the unit of the rear view mirror assembly comprises a second base member (5) mounted on the first flange (305) and the second flange (307) of the first base member (3), the second base member (5) having a hook (6) and a mounting portion (271) thereon, a spring member (9) mounted on the hook (6) of the second base member (5) and having a first engagement device (10) thereon, the spring member (9) being able to support a predetermined amount of a downward vertical force on the hook (6) of the second base member (5), a mounting member (33) disposed on the mounting portion (271) of the second base member (5), the mounting member (33) having a first aperture (34) and a first ball portion (32), the first ball portion (32) disposed around the first aperture (34), thereof, the first ball portion (32) disposed on a bottom surface of the mounting member (33), a support arm (15) having an outer surface (351), an inner surface and an inner peripheral edge disposed on an end (35) thereof, the outer surface (351) of the support arm (15) mounted slidably on the first ball portion (32) of the mounting member (33), the inner surface of the support arm (15) having a second ball portion (352), the inner peripheral edge defining a second aperture (37) within the end (35) of the support arm (15), the second aperture (37) of the support arm (15) extending from the second ball portion (352) of the inner surface to the outer surface (351) of the support arm (15), a diameter of the second aperture (37) being greater than the diameter of the first aperture (34) of the mounting member (33), a rear view mirror (25) mounted rotatably on an opposite end (24) of the support arm (15), a first socket member (40) mounted slidably on the second ball portion (352) of the support arm (15), and an engagement member (38) inserted into the second aperture (37) of the support arm (15) and the first aperture (34) of the mounting member (33), the engagement member (38) having one end engaging with the first engagement device (10) of the spring member (9), and an opposite end of engagement member (38) connected to the first socket member (40), the engagement member (38) supporting the first socket member (40), the support arm (15) and the mounting member (33) on the second base member (5) through the spring member (9), the unit of the rear view mirror assembly being united by the engagement member (38), and installed on the first base member (3).

7. A rear view mirror assembly as claimed in claim 6, characterized in that the first base member (3) has a coefficient of thermal expansion similar to that of the windshield (1).

**Patentansprüche**

1. Rückspiegel-Bausatz eines Fahrzeugs mit einem ersten Basisteil (3), das eine metallische, mittels eines Klebemittels (2) an einer Windschutzscheibe (1) eines Fahrzeugs zur Befestigung der ersten Basisteils (3) an der Windschutzscheibe (1) angebrachte Berührungsfläche aufweist, und mit einer an dem ersten Basisteil (3) gehaltenen Baueinheit des Rückspiegel-Bausatzes, dadurch gekennzeichnet, daß das erste Basisteil aus einem gewalzten rostfreien Stahl gefertigt ist und die Berührungsfläche des erstens Basisteils (3) eine glatte Fläche ohne Poren in dieser, so daß ein Vorhandensein von Luft zwischen dem Klebemittel (2) und der Berührungsfläche des ersten Basisteils (3) verhindert wird, aufweist.

2. Rückspiegel-Bausatz nach Anspruch 1, dadurch gekennzeichnet, daß das erste Basisteil (3) einen zum Wärmedehnungskoeffizienten der Windschutzscheibe (1) gleichartigen Wärmedehnungskoeffizienten hat.

3. Rückspiegel-Bausatz nach Anspruch 1, dadurch gekennzeichnet, daß das erste Basisteil (3) an der Windschutzscheibe (1) befestigt ist und ein Seitenteil mit einem ersten Winkelstück (305) sowie ein Frontteil mit einem zweiten Winkelstück (307) aufweist und die Baueinheit des Rückspiegel-Bausatzes ein zweites, am ersten sowie am zweiten Winkelstück (305, 307) des ersten Basisteils (3) gehaltenes Basisteil (5) umfaßt, daß das zweite Basisteil (5) mit einem Haken (6) sowie einem Befestigungsteil (271) an diesem versehen ist, daß am Haken (6) des zweiten Basisteils (5) ein Federelement (9) mit einem Eingriffstück (10) an diesem gehalten ist, daß das Federelement (9) eine vorbestimmte Größe einer Kraft am haken (6) des zweiten Basisteils (5) aufnimmt, daß am Befestigungsteil (271) des zweiten Basisteils (5) ein Halterungsteil (14) mit einer ersten Fläche (272) angeordnet ist, daß das Halterungsteil (14) eine erste Öffnung (141) sowie ein rund um die erste Öffnung (141) herum an einer zweiten, entgegengesetzten Fläche des Halterungsteils (14) angeordnetes erstes Sockelteil (13) aufweist, daß ein Tragarm (15) ein erstes Endstück (16) mit einer Außenfläche (161), einer Innenfläche sowie einer Innenumfangsfläche und ein zweites, entgegengesetztes Endstück (24), an dem ein Rückspiegel (25) drehbar zu befestigen ist, hat, daß die Außenfläche (161) des Tragarmes (15) gleitend an ersten Sockelteil (13) des Halterungsteils (14) gelagert ist, daß die Innenfläche des Tragarmes ein zweites Sockelteil (162) aufweist, daß die Innenumfangskante eine zweite, vom zweiten Sockelteil (162) der Innenfläche zur Außenfläche (161) des Tragarmes (15) verlaufende Öffnung (21) abgrenzt, daß ein Durchmesser der zweiten Öffnung (21) des Tragarmes (15) größer ist als ein Durchmesser der ersten Öffnung (141) des Halterungsteils (14), daß ein zweites Kugelelement (18) gleitend am zweiten Sockelteil (162) der Innenfläche des Tragarmes (15) gelagert ist und daß ein Verbindungselement (19) in die zweite Öffnung (21) des Tragarmes (15) sowie die erste Öffnung (141) des Halterungsteils (14) eingesetzt ist, wobei das Verbindungselement (19) ein mit dem Eingriffsstück (10) des Federelements (9) in Eingriff befindliches Ende aufweist sowie ein entgegengesetztes Ende des Eingriffsstücks (19) mit dem zweiten Kugelelement (18) verbunden ist, das Verbindungselement (19) das zweite Kugelelement (18), den Tragarm (15) sowie das Halterungsteil (14) am zweiten Basisteil (5) über das Federelement (9) lagert, die Baueinheit des Rückspiegel-Bausatzes durch das Verbindungselement (19) vereinigt sowie am ersten Basisteil (3) angebaut ist.

4. Rückspiegel-Bausatz nach Anspruch 1, dadurch gekennzeichnet, daß das erste Basisteil (3) ein Wandstück (313), einen ersten Flansch (314) sowie Klemmleisten (315) aufweist, daß das Wandstück (313) des ersten Basisteils (3) von einer Hauptplatte (311) des ersten Basisteils (3) ausgeht, daß der erste Flansch (314) des ersten Basisteils (3) sich von einer unteren Kante des Wandstücks (313) des ersten Basisteils (3) einwärts erstreckt, daß die Klemmleisten (315) in einer rückwärtigen Richtung des Fahrzeugs von beiden Enden des Wandstücks (313) des ersten Basisteils (3) aus verlaufen und daß die Baueinheit des Rückspiegel-Bausatzes umfaßt: ein zweites Basisteil (5) mit einem Befestigungsteil (271), mit einer ersten Platte (522) und mit einem Haken (6) an dieser, wobei eine Stirnseite des Befestigungsteils (271) des zweiten Basisteils (5) am ersten Flansch (314) des ersten Basisteils (3) gelagert und die erste Platte (522) an den Klemmleisten (315) des ersten Basisteils (3) gehalten ist, ein am Haken (6) des zweiten Basisteils (5) befestigtes Federelement (9), wobei das Federelement (9) eine Kappe (10) hat sowie einen vorbestimmten Anteil einer Kraft am Haken (6) des zweiten Basisteils (5) aufnimmt, ein an einem inneren Teil des Befestigungsteils (271) des zweiten Basisteils (5) angeordndetes Halterungsteil (14), wobei das Halterungsteil (14) eine erste Öffnung (141) sowie ein erstes Sockelteil (13) aufweist und die erste Öffnung (141) im Sockelteil (13) offen sowie an einer Fläche des Halterungsteils (14) angeordnet ist, einen Tragarm (15) mit einem ersten, einen ersten Kugelabschnitt (161), eine Innenumfangskante sowie ein zweites Sockelteil (162) aufweisenden Endstück (16) und mit einem zweiten, entgegengesetzten Endstück (24), an dem ein Rückspiegel drehbar zu lagern ist, wobei der erste Kugelabschnitt (161) des Tragarmes (15) an einer Außenfläche des ersten Endstücks (16) des Tragarmes (15) angeordnet ist, der erste Kugelabschnitt (161) gleichtend am ersten Sockelteil (13) des Halterungsteils (14) gelagert ist, das zweite Sockelteil (162) an einer Innenfläche des ersten Endstücks (16) des Tragarmes (15) angeordnet ist, die Innenumfangskante eine zweite Öffnung (21) innerhalb des ersten Endstücks (16) des Tragarmes (15) anbgrenzt, die zweite Öffnung (21) durch das zweite Sockelteil (162) des Tragarmes (15) sowie den ersten Kugelabschnitt (161) des Tragarmes (15) verläuft und ein Durchmesser der zweiten Öffnung (21) größer ist als ein Durchmesser der ersten Öffnung (141) des Halterungsteils (14), ein zweites Kugelelement (18), das gleitend am zweiten Sockelteil (162) des Tragarmes (15) gelagert ist, wobei das zweite Kugelelement (18) mit einer dritten Öffnung (181) versehen ist, und ein Verbindungselement (19), das in die dritte Öffnung (181) des zweiten Kugelelements (18), die zweite Öffnung (21) des Tragarmes (15) und die erste Öffnung (141) des Halterungsteils (14) eingesetzt ist, wobei ein Ende des Verbindungs elements (19) mit der Kappe (10) des Federelements (9) in Eingriff ist, ein entgegengesetztes Endstück (24) des Verbindungselements (19) ein Kopfstück aufweist, das das zweite Kugelelement (18), den Tragarm (15) und das Halterungsteil (14) am zweiten Basisteil (5) über das Federelement (9) lagert, die Baueinheit des Rückspiegel-Bausatzes durch das Verbindungselement (19) vereinigt und die Baueinheit des Rückspiegel-Bausatzes am ersten Basisteil (3) angebaut ist.

5. Rückspiegel-Bausatz nach Anspruch 4, dadurch gekennzeichnet, daß das erste Basisteil (3) einen Wärmedehnungskoeffizienten hat, der demjenigen der Windschutzscheibe (1) gleichartig ist.

6. Rückspiegel-Bausatz nach Anspruch 1, dadurch gekennzeichnet, daß das erste Basisteil (3) ein Seitenteil mit einem ersten Winkelstück (305) sowie ein Frontteil mit einem zweiten Winkelstück (307) aufweist und die Baueinheit des Rückspiegel-Bausatzes umfaßt: ein zweites, am ersten Winkelstück (305) sowie am zweiten Winkelstück (307) des ersten Basisteils (3) gehaltenes Basisteil (5), wobei das zweite Basisteil (5) einen Haken (6) sowie ein Befestigungsteil (271) an diesem aufweist, ein am Haken (6) des zweiten Basisteils (5) gehaltenes Federelement (9) mit einem ersten Eingriffsstück (10) an diesem, wobei das Federelement (9) imstande ist, einen vorbestimmten Anteil einer abwärts gerichteten vertikalen Kraft am Haken (6) des zweiten Basisteils (5) aufzunehmen, ein am Befestigungsteil (271) des zweiten Basisteils (5) angeordnetes Halterungsteil (33), wobei das Halterungsteil (33) eine erste Öffnung (34) sowie einen ersten Kugelabschnitt (32) aufweist, der erste Kugelabschnitt (32) rund um die erste Öffnung (34) herum und an einer unteren Fläche des Halterungsteils (33) angeordnet ist, einen Tragarm (15) mit einer Außenfläche (351), einer Innenfläche und einer an einem Ende (35) von dieser befindlichen Innenumfangskante, wobei die Außenfläche (351) des Tragarmes (15) gleitend am ersten Kugelabschnitt (32) des Halterungsteils (33) gelagert ist, die Innenfläche des Tragarmes (15) einen zweiten Kugelabschnitt (352) hat, die Innenumfangskante eine zweite Öffnung (37) innerhalb des Endstücks (35) des Tragarmes (15) abgrenzt, die zweite Öffnung (37) des Tragarmes (15) sich vom zweiten Kugelabschnitt (352) der Innenfläche zur Außenfläche (351) des Tragarmes (15) erstreckt und ein Durchmesser der zweiten Öffnung (37) größer ist als ein Durchmesser der ersten Öffnung des Halterungsteils (33), einen drehbar an einem entgegengesetzten Endstück (24) des Tragarmes (15) gelagerten Rückspiegel (25), ein erstes Sockelteil (40), das gleitend am zweiten Kugelabschnitt (352) des Tragarmes (15) gelagert ist und ein in die zweite Öffnung (37) des Tragarmes (15) sowie die erste Öffnung (34) des Halterungsteils (33) eingesetztes Verbindungselement (38), wobei ein Ende des Verbindungselements (38) mit dem ersten Eingriffsstück (10) des Federelements (9) in Eingriff und ein entgegengesetztes Ende des Verbindungselements (38) mit dem ersten Sockelteil (40) verbunden ist, das Verbindungselement (38) das erste Sockelteil (40), den Tragarm (15) sowie das Halterungsteil (33) am zweiten Basisteil (5) über das Federelement (9) lagert und die Baueinheit des Rückspiegel-Bausatzes durch das Verbindungselement (38) vereinigt sowie am ersten Basisteil (3) angebaut wird.

7. Rückspiegel-Bausatz nach Anspruch 6, dadurch gekennzeichnet, daß das erste Basisteil (3) einen Wärmedehnungskoeffizienten hat, der zu demjenigen der Windschutzscheibe (1) gleichartig ist.

**Revendications**

1. Un rétroviseur pour véhicule comportant une première embase (3) ayant une surface de contact métallique, fixé à un pare-brise (1) d'un véhicule par un moyen adhésif (2) pour maintenir la première embase (3) sur le pare-brise (1) et une unité du rétroviseur montée sur la première embase (3) caractérisé en ce que la première embase est faite en acier inoxydable laminé et en ce que la surface de contact de la première embase (3) est lisse, dépourvue de pores empêchant ainsi la présence de l'air entre le moyen adhésif (2) et la surface de contact de la première embase (3).

2. Un rétroviseur selon la revendication 1, caractérisé en ce que la première embase (3) a un coefficient de dilatation thermique analogue au coefficient de dilation thermique de pare-brise (1).

3. Un rétroviseur selon la revendication 1, caractérisé en ce que la premièr embase (3) est fixée au pare-brise (1) et comporte une partie latérale avec un premier rabat (305) et une partie frontale avec un second rabat (307) et en ce que l'unité du rétroviseur comporte une seconde embase (5) montée sur le premier et le second rabats (305, 307) de a première embase (3) la seconde embase (5) comprenant un crochet (6) comprenant une partie de monture (271), un ressort (9) monté sur le crochet (6) de la seconde embase (5) comprenant des moyens d'emprise (10), le ressort (9) supportant une fraction prédéterminée de l'effort qui s'exerce sur le crochet (6) de la seconde embase (5), une monture (14) ayant une première surface (272) disposée sur la partie de monture (271) de la seconde embase (5), la monture (14) ayant une première ouverture (141) et une première partie en manchon (13) disposée autour de la première ouverture (141) sur une deuxième surface opposée de la monture (14), un bras support (15) ayant une première extrémité (16) avec une surface extérieure (161) et une surface intérieure et un bord périphérique intérieur, et une deuxième extrémité opposée (24) sur laquelle un rétroviseur (25) est adapté pour être monté à rotation la surface extérieure (161) du bras support (15) montée coulissante sur la première partie du manchon (13) de la monture (14), la surface intérieure du bras support (15) ayant une deuxième partie en manchon (162), le bord périphérique intérieur définissant une seconde ouverture (21), se prolongeant depuis la deuxième partie en manchon (162) de la surface intérieure jusqu'à la surface extérieure (161) du bras support (15), un diamètre de la seconde ouverture (21) du bras support (15) étant supérieur au diamètre de la première ouverture (141) de la monture (14), un deuxième élément à rotule (18) monté coulissant sur la deuxième partie en manchon (162) de la surface intérieure du bras support (15) et un élément d'emprise (19) inséré dans la deuxième ouverture (21) du bras support (15) et la première ouverture (141) de la monture (14) l'élément d'emprise (19) ayant une extrémité s'engageant dans le dispositif d'emprise (10) du ressort (9) et une extrémité opposée (24) de l'élément d'emprise (19) reliée au deuxième élément à rotule (18), l'élément d'emprise (19) supportant le deuxième élément à rotule (18), le bras support (15) et la monture (14) sur la seconde embase (5) par l'intermédiaire du ressort (9), l'unité de rétroviseur étant assemblée par l'élément d'emprise (19) et installée sur la premièr embase (3).

4. Un rétroviseur selon la revendication 1, caractérisé en ce que la première embase (3) comporte une paroi (313), une première collerette (314) et des pattes de serrage (315), la paroi (313) de la première embase (3) se prolongeant depuis une plaque principale (311) de la première embase (3), la première collerette (314) de la première embase (3) se prolongeant vers l'intérieur à partir d'un bord inférieur de la paroi (313) de la première embase (3), les pattes de serrage (315) se prolongeant dans une direction arrière du véhicule à partir des deux extémités de la paroi (313) de la première embase (3), et l'unité du rétroviseur comprenant une deuxième embase (5) ayant une partie de monture (271), une première plaque (522) et un crochet (6) monté dessus, une partie frontale de la monture (271) de la deuxième embase (5) étant montée sur la première collerette (314) de la première embase (3), la première plaque (522) étant montée sur les pattes de serrage (315) de la première embase (3), un ressort (9) monté sur la crochet (6) de la deuxième embase (5), le ressort (9) ayant un capot (10) et supportant une fraction prédéterminée d'un effort sur le ressort (6) de la deuxième embase (5), une monture (14) disposée sur une partie intérieure de la partie de monture (271) de la deuxième embase (5), la monture (14) ayant une première ouverture (141) et une première partie en manchon (13), la première ouverture (141) aménagée dans la première partie en manchon (13) et disposée sur une surface de la monture (14), un bras support (15) ayant une première extrémité (16) avec une première partie à rotule (161), un bord périphérique intérieur et une deuxième partie en manchon (162) et une seconde extrémité (24) sur laquelle le rétroviseur est adapté pour être supportée rotatif, la première partie à rotule (161) du bras support (15) étant disposée sur une surface extérieure de la premère extrémité (16) du bras support (15), la première partie (161) étant montée coulissante sur la première partie en manchon (13) de la monture (14), la deuxième partie en manchon (162) étant disposée sur une surface intérieure de la première extrémité (16) du bras support (15), le bord périphérique intérieur définissant une deuxième ouverture (21) à l'intérieur de la première extrémité (16) du bras support (15), la deuxième ouverture (21) se prolongeant à travers la deuxième partie en manchon (162) du bras support (15) et la première partie à rotule (161) du bras support (15), un diamètre de la deuxième ouverture (21) étant supérieur au diamètre de la première ouverture (141) de la monture (14), un deuxième élément à rotule (18) étant monté coulissant sur la deuxième partie en manchon (162) du bras support (15), le deuxième élément à rotule (18) comprenant une troisième ouverture (181), et un élément d'emprise (19) étant inséré dans la troisième ouverture (181) du deuxième élément à rotule (18), la deuxième ouverture (21) du bras support (15) et la première ouverture (141) de la monture (14), une extrémité de l'élément d'emprise (19) engageant avec le capot (10) du ressort (9) une extrémité opposée (24) de l'élément d'emprise (19) ayant une partie au sommet qui supporte le deuxième élément à rotule (18), le bras support (15) et la monture (14) sur la deuxième embase (5) pas l'intermédiaire du ressort (9), l'unité du rétroviseur étant attachée par l'élément d'emprise (19) et l'unité de rétroviseur étant installée sur la première embase (3).

5. Un rétroviseur selon la revendication 4, caractérisé en ce que la première embase (3) a un coefficient de dilatation thermique similaire à celui du pare-brise (1).

6. Un rétroviseur selon la revendication 1, caractérisé en ce que la première embase (3) comporte une partie latérale avec un premier rabat (305) et une partie frontale avec un second rabat (307) et l'unité de rétroviseur comprenant une deuxième embase (5) montée sur le premier rabat (305) et le deuxième rabat (307) de la première embase (3), la seconde embase (5) comprenant un crochet (6) et une partie de monture (271), un ressort (9) monté sur le crochet (6) de la deuxième embase (5) et comportant un premier dispositif d'emprise (10), le ressort (9) étant capable de supporter une fraction prédéterminée d'un effort vertical vers le bas s'exerçant sur le crochet (6) de la deuxième embase (5), un élément de monture (33) disposée sur la partie de monture (271) de la deuxième embase (5), l'élément de monture (33) ayant une première ouverture (34) et une première partie à rotule (32), la première partie à rotule (32) étant disposé autour de la première ouverture (34) de l'élément de monture (33), la première partie à rotule (32) étant disposée sur une surface de fond de l'élément de monture (33), un bras support (15) ayant une surface extérieure (351), une surface intérieure et un bord périphérique intérieur disposé sur une extvémité (35) de celui-ci, la surface extérieure (351) du bras support (15) étant monté coulissante sur la première partie à rotule (32) de l'élément de monture (33), la surface intérieure du bras support (15) ayant une deuxième partie à rotule (352), le bord périphérique intérieure définissant une deuxième ouverture (37) à l'intérieur de l'extrémité (35) du bras support (15), la deuxième ouverture (37) du bras support (15) se prolongeant depuis la deuxième partie à rotule (352) de la surface intérieure, jusqu'à la surface extérieure (351) du bras support (15), un diamètre de la dxième ouverture (37) étant supérieur au diamètre de la première ouverture (34) de l'élément de monture (33), un rétroviseur (25) étant monté rotatif sur une extrémité opposée (24) du bras support (15), un premier élément en manchon (40) étant monté coulissant sur la deuxième partie à rotule (352) du bras support (15) et un élément d'emprise (38) étant inséré dans la deuxième ouverture (37) du bras support (15) et la première ouverture (34) de l'élément de monture (33), l'élément d'emprise (38) ayant une extrémité s'engageant dans le premier dispositif d'emprise (10) du ressort (9), et une extrémité opposée de l'élément d'emprise (38) étant reliée au premier élément en manchon (40), l'élément d'emprise (38) supportant le premier élément en manchon (40), le bras support (15) et l'élément de monture (33) sur la deuxième embase (5), par l'intermédiaire du ressort (9), l'unité du rétroviseur étant attachée par l'élément d'emprise (38) et installée sur la première embase (3).

7. Un rétroviseur selon la revendication 6, caractérisé en ce que la première embase (3) a un coefficient de dilatation similaire à celui du pare-brise (1).

Fig. 1

EP 0 169 734 B1

# Fig. 2

## Fig.  3

## Fig.  4

## Fig.  5

## Fig.  6

# Fig.  7

# Fig. 8

# Fig. 9

Fig. 10

EP 0 169 734 B1

Fig. 11

9

Fig. 12

# Fig. 13